# FASCICULE DE BREVET EUROPEEN

(11) **EP 1 989 085 B1**
(45) Date de publication et mention de la délivrance du brevet: **06.11.2013**
(21) Numéro de dépôt: 07730991.2
(22) Date de dépôt: 16.02.2007
(51) Int. Cl.: B60R 25/10, B60K 15/04, G08B 21/18

(54) **MOYEN ELECTRONIQUE DE DETECTION ET D'ALARME SANS FIL PERMETTANT LA SURVEILLANCE DU NIVEAU D'UN LIQUIDE CONTENU DANS UN RESERVOIR OU UNE CITERNE**
ELEKTRONISCHE DRAHTLOSE ERFASSUNGS- UND WARNVORRICHTUNG ZUR ÜBERWACHUNG DES PEGELS EINER IN EINEM BEHÄLTER ODER TANK ENTHALTENEN FLÜSSIGKEIT
WIRELESS DETECTING AND WARNING ELECTRONIC DEVICE FOR MONITORING THE LEVEL OF A LIQUID CONTAINED IN A RESERVOIR OR A TANK

(30) Priorité: 17.02.2006 FR 0601391
(43) Date de publication de la demande: 12.11.2008
(73) Titulaire: Delphi France SAS, 95972 Roissy CDG Cedex (FR)
(72) Inventeur: Herbert, Tanguy, 35120 Hirel (FR); Josselin, Dominique, 35140 St Aubin du Cormier (FR)
(74) Mandataire: Robert, Vincent
(86) Numéro de dépôt international: PCT/FR2007/000280
(87) Numéro de publication internationale: WO 2007/093714

(56) Documents cités:
- GB-A- 2 338 308
- GB-A- 2 343 283
- US-A1- 2001 045 892
- US-A1- 2006 033 618

## Description

Moyen électronique de détection et d'alarme sans fil permettant la surveillance du niveau d'un liquide contenu dans un réservoir ou citerne.

La présente invention concerne un dispositif électronique sans fil permettant la détection d'un changement de niveau d'un liquide contenu dans un réservoir ou une citerne.

Le but de l'invention est de fournir un dispositif électronique capable de détecter tout changement de niveau à l'intérieur d'un réservoir contenant un liquide quel qu'il soit.

Ce dispositif, installé par exemple sur un réservoir de camion, alertera immédiatement son propriétaire en cas d'arrachement du bouchon ou de perte de carburant quelle qu'en soit l'origine, et son installation reste simple et très rapide.

Il existe de nos jours, afin d'éviter le vol de carburant par le goulot du réservoir, quelques système sur le marché tel que le bouchon à verrouillage mécanique, ce système reste peu efficace devant les malfrats qui n'hésitent pas à fracturer le bouchon du réservoir pour en siphonner son contenu et ce sans être dérangé.

Un système, plus récent, consiste à fixer à l'intérieur du réservoir une pièce mécanique empêchant ainsi toute introduction de tuyau, l'opération consistant à siphonner le carburant est rendu ici quasiment impossible. Son efficacité repose sur la nouveauté du système et donc sur 'l'effet de surprise'. Mais ce système reste vulnérable car démontable et n'empêche pas de percer le réservoir pour en récupérer le carburant. Le document GB-A-22338308 montre l'état de la technique le plus proche.

Pour résoudre tous ces problèmes techniques, le dispositif selon l'invention, comporte deux modules électroniques.

Le premier module, électronique, sera intégré dans le bouchon du réservoir (16). L'électronique(12) sera donc moulée dans ce bouchon spécifique(16). Ce module appelé ici module de surveillance (13).

Ce module de surveillance (13) sera parfaitement autonome ceci grâce à un système de piles standards (2) également intégrées au bouchon.

En fonctionnement, le module (13) sera chargé de contrôler le niveau de liquide grâce à un système de télémesure (1). Cette télémesure sera par la suite traitée par un microcontrôleur (4). A son tour le microcontrôleur (4) émettra périodiquement vers le second module (15), via un transmetteur-récepteur HF(4), un signal radio contenant l'état du module lors de la transmission.

Le second module, appelé module de commande (15), aura la charge de gérer le déclenchement des alarmes, en analysant les informations issus des émissions radio du module de surveillance (13).

Ce module sera connecté (6) au réseau d'alimentation électrique du véhicule dont il doit assurer la protection, par exemple à l'allume cigare du véhicule ou directement à la batterie. Le module de commande (15) sera équipé d'un système d'alarme acoustique (9) ou/et visuel (10) géré par un microcontrôleur (7), ainsi que d'un transmetteur-récepteur HF(5) pour la communication entre les différents modules.

L'activation ou la désactivation en mode surveillance du module de surveillance (13) se fera par l'intermédiaire du module de commande (15) via le transmetteur-récepteur HF (5). Ce signal radio issue du module (15), aura pour but d'activer ou désactiver le mode dit de 'scrutation' du module de surveillance (13).

Le module de commande (15) aura la possibilité de gérer plusieurs modules de surveillance (13).

Le déclenchement d'une alarme par le module (15) se fera inévitablement en cas, d'ouverture du bouchon, d'arrachement du bouchon, en cas de baisse du niveau de carburant dans le réservoir (14). Mais aussi le fait de détériorer le bouchon (16) ou le module de surveillance (13) aura pour conséquence immédiate de déclencher le système d'alame par le module de commande (15).

L'alarme émise par ce système aura pour but de prévenir son propriétaire et dissuader les malfrats si tentative de vol il y a.

L'utilisateur pourra évetuellement sélectionner son type d'alarme parmis les différentes combinaisons possibles énoncées ci dessous par l'intermédiaire d'un IHM (11):
- Acoustique à fort niveau via une sirène d'alarme (9).
- Acoustique à faible niveau via un 'avertisseur sonore' (9) intégré au module de commande (15), cette alarme discrète étant destinée uniquement au propriétaire installé proche du module de commande.
- Visuel type LED (10), intégré sur le module de commande (15), cette LED est à l'intention du propriétaire et permet non seulement de signaler une anomalie. C'est également une alarme discrète.
- Télésurveillance (12), l'utilisateur aura la possibilité de connecter au module de commande (15) un système de télésurveillance déjà existante dans le commerce. Ce dispositif permettra d'émettre un appel téléphonique vers le numéro de son choix en cas d'anomalie.

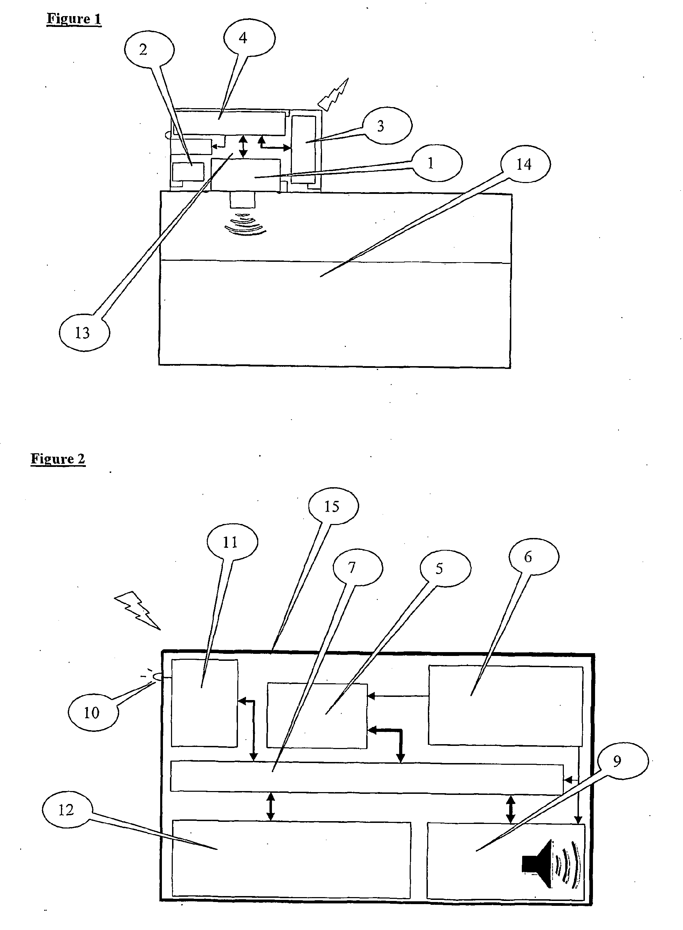

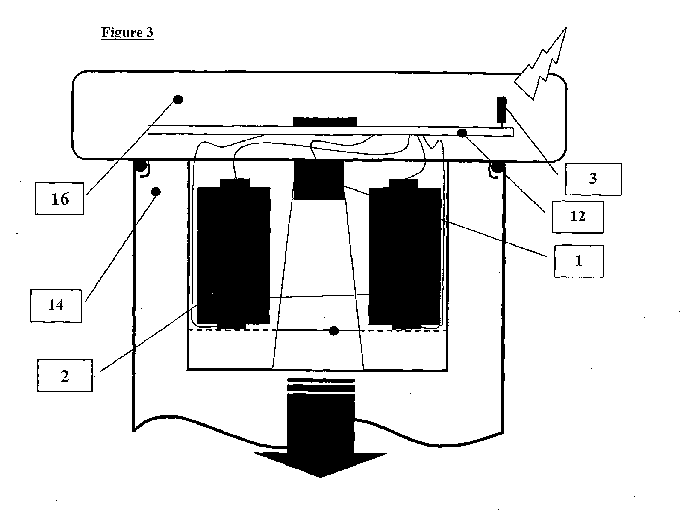

## Revendications

1. Dispositif électronique de détection permettant la surveillance du niveau d'un carburant liquide dans un réservoir de véhicule,
le dispositif comportant un premier module (13) électronique de surveillance du niveau du carburant liquide dans le réservoir de véhicule, comportant un premier dispositif radio transmetteur-récepteur (3) sans fil et une alimentation à pile, et un second module (15) électronique de commande comportant un second transmetteur-récepteur (5) pour la communication sans fil avec le premier module (13) de surveillance,
- le premier module (13) électronique de surveillance comporte :
un système (1) de télémesure du niveau du liquide contenu dans le réservoir, pour le contrôle du niveau du liquide,
un microcontrôleur (4) pour le traitement de la télémesure et la transmission périodique, via le premier dispositif radio transmetteur- récepteur (3) sans fil, d'un signal radio contenant l'état du système de télémesure lors de la transmission dans un mode de scrutation au deuxième module (15) de commande,
un moyen d'activation dans le mode de scrutation ou de désactivation dans le mode de scrutation du module (13) de surveillance en réponse à un signal radio d'activation du mode de scrutation ou de désactivation du mode de scrutation reçu sur le dispositif radio transmetteur- récepteur (3),
- le second module électronique (15) de commande étant chargé d'analyser les informations issues des émissions radio du module (13) de surveillance pour déclencher une alarme en cas de baisse du niveau de carburant dans le réservoir,
le second module électronique (15) de commande comportant un moyen d'envoi du signal radio d'activation du mode de scrutation ou de désactivation du mode de scrutation du module (13) de surveillance via le second transmetteur-récepteur (5).

2. Dispositif suivant la revendication 1, **caractérisé en ce que** le système (1) de télémesure est à ultrasons.

3. Dispositif suivant l'une, quelconque des revendications précédentes, **caractérisé en ce que** le second module (15) électronique de commande comporte un système d'alarme acoustique (9) et/ou visuel (10).

4. Dispositif suivant l'une quelconque des revendications précédentes, **caractérisé en ce que** le second module (15) électronique de commande comporte un une alarme visuelle type LED.

## Patentansprüche

1. Elektronische Erfassungsvorrichtung zum Überwachen des Pegels eines flüssigen Kraftstoffs in einem Fahrzeugtank,
wobei die Vorrichtung ein erstes elektronisches Modul (13) zum Überwachen des Pegels des flüssigen Kraftstoffs in dem Fahrzeugtank mit einer ersten drahtlosen Sender-/Empfänger-Funkvorrichtung (3) und mit einer Batterieversorgung, sowie ein zweites elektronisches Modul (15) zur Steuerung mit einem zweiten Sender/Empfänger (5) zur drahtlosen Kommunikation mit dem ersten Modul (13) zur Überwachung enthält,
- wobei das erste elektronische Überwachungsmodul (13) aufweist:
ein System (1) zur Fernmessung des Pegels der in dem Tank enthaltenen Flüssigkeit für die Kontrolle des Flüssigkeitspegels,
einen Mikrocontroller (4) zum Verarbeiten der Fernmessung und zum periodischen Übertragen eines Funksignals über die erste Sender-/Empfänger-Funkvorrichtung (3), welches Signal bei der Übertragung zum zur Steuerung bestimmten zweiten Modul (15) in einem Abfragemodus den Stand des Fernmessungssystems aufweist,
ein Aktivierungsmittel zum Aktivieren im Abfragemodus oder zum Deaktivieren im Abfragemodus des Überwachungsmoduls (13) in Antwort auf ein Funksignal zum Aktivieren des Abfragemodus oder zum Deaktivieren des Abfragemodus, das an der Sender-/Empfänger- Funkvorrichtung (3) empfangen wird,
- wobei das zweite elektronische Modul (15) zur Steuerung die Aufgabe hat, die von den Funkübertragungen des Überwachungsmoduls (13) stammenden Informationen zu analysieren, um im Falle eines Rückgangs des Pegels an Kraftstoff im Tank eine Warnung auszulösen,
wobei das zweite elektronische Modul (15) zur Steuerung ein Sendemittel zum Senden des Funksignals zum Aktivieren des Abfragemoduls oder zum Deaktivieren des Abfragemodus des Überwachungsmoduls (13) über den zweiten Sender-/Empfänger (3) aufweist.

2. Vorrichtung nach Anspruch 1, **dadurch gekennzeichnet, dass** das System (1) zur Fernmessung ein Ultraschallsystem ist.

3. Vorrichtung nach einem der vorangehenden Ansprüche, **dadurch gekennzeichnet, dass** das zweite elektronische Modul (15) zur Steuerung ein System zur akustischen (9) und/oder visuellen (10) Warnung aufweist.

4. Vorrichtung nach einem der vorangehenden Ansprüche, **dadurch gekennzeichnet, dass** das zweite elektronische Modul (15) zur Steuerung eine visuelle Warneinheit vom Typ LED aufweist.

## Claims

1. Electronic detection device permitting monitoring of the level of a liquid fuel in a vehicle tank,
the device including a first electronic unit (13) for monitoring the level of the liquid fuel in the vehicle tank, including a first wireless radio transceiver device (3) and a battery power supply, and a second electronic control unit (15) including a second transceiver (5) for wireless communication with the first monitoring unit (13),
- the first electronic monitoring unit (13) includes:
a system (1) for remote measurement of the level of the liquid contained in the tank, to monitor the level of the liquid,
a microcontroller (4) for processing of the remote measurement and periodic transmission, via the first wireless radio transceiver device (3), of a radio signal containing the state of the remote measurement system on transmission in a polling mode to the second control unit (15),
a means for activation in the polling mode or deactivation in the polling mode of the monitoring unit (13) in response to a radio signal for activation of the polling mode or deactivation of the polling mode received at the radio transceiver device (3),
- the second electronic control unit (15) being tasked with analysing the data emanating from the radio transmissions of the monitoring unit (13) to trigger an alarm in case of lowering of the fuel level in the tank,
the second electronic control unit (15) including a means for sending a radio signal for activation of the polling mode or for deactivation of the polling mode of the monitoring unit (13) via the second transceiver (5).

2. Device as described in claim 1, **characterised by** the fact that the remote measurement system (1) is ultrasonic.

3. Device as described in any one of the preceding claims, **characterised by** the fact that the second electronic control unit (15) includes an acoustic (9) and/or visual (10) alarm system.

4. Device as described in any one of the preceding claims, **characterised by** the fact that the second electronic control unit (15) includes a visual alarm of LED type.
